# EUROPÄISCHE PATENTSCHRIFT

(11) **EP 0 385 099 B1**
(45) Veröffentlichungstag und Bekanntmachung des Hinweises auf die Patenterteilung: **06.04.1994**
(21) Anmeldenummer: 90101383.9
(22) Anmeldetag: 24.01.1990
(51) Int. Cl.: B09B 1/00

(54) **Verfahren zur schadlosen Entgasung und Deponierung von rieselfähigen Feststoffen in untertägigen Kavernen**
Method for the non-pollutant degassing and disposing of free-flowing solids in underground cavities
Méthode pour le dégazage non polluant et la mise en dépôt de solides coulants dans des cavernes souterraines

(30) Priorität: 27.02.1989 DE 3906006
(43) Veröffentlichungstag der Anmeldung: 05.09.1990
(73) Patentinhaber: KALI UND SALZ AKTIENGESELLSCHAFT, D-34111 Kassel (DE)
(72) Erfinder: Schultz, Heinz, Dr., D-3501 Ahnatal-Heckershs. (DE); Neitzel, Ulrich, Dr., D-3500 Kassel (DE)

(56) Entgegenhaltungen:
- DE-A- 3 137 950
- DE-A- 3 200 347
- DE-A- 3 601 428
- FR-A- 2 562 044

## Beschreibung

Die Erfindung betrifft ein Verfahren zur schadlosen Deponierung von rieselfähigen Feststoffen, insbesondere von Salzschlacken aus der Aluminiumherstellung.

In allen Industrieländern fallen sowohl in der Grundstoffindustrie, wie vor allem auch in der chemischen Industrie Abfallstoffe an. Trotz aller Bemühungen, diese als Sekundärrohstoffe zu nutzen bzw. deren Anfall durch entsprechende Produktionstechnologien geringzuhalten oder ganz zu vermeiden, wird es auch weiterhin gewisse Mengen geben, die schadlos beseitigt werden müssen, um eine unzumutbare Belastung für die Umwelt zu verhindern.

Als besonders sicher werden in dieser Hinsicht untertägige Deponien angesehen und entsprechend genutzt (Überblick in der Zeitschrift für angewandte Geologie Bd. 27, 1981; Heft 1, Seite 17 - 25).

Ein Verfahren zur Vorbehandlung von festen Abfallstoffen zur Einführung in untertägige Salzkavernen wird in der DE-OS 36 01 428 beschrieben. Hierbei geht es darum, das gegebenenfalls stückige bzw. klebrige Material durch Mahlung bzw. Pelletisierung so aufzübereiten, daß es störungsfrei in die Salzkaverne eingerieselt werden kann.

Unter den Abfallstoffen, die in der Industrie anfallen und entsorgt werden müssen, gibt es solche, die bei der Lagerung durch Reaktion mit der umgebenden Luft und des darin enthaltenden Wassers Gase entwickeln.

Die DE-PS 32 00 347 gibt Maßnahmen an, mit denen die in Gegenwart von Feuchtigkeit Gase entwickelnde Salzschlacke, die zur Abdeckung von schmelzflüssigem Aluminium gedient hat und von diesem getrennt ist, in ein deponierbares oder aufarbeitbares Produkt verarbeitet werden kann. Hierzu wird die in feinteilige Form überführte Salzschlacke mit heißem Wasser behandelt, anschließend einer Wärmebehandlung unterworfen, getrocknet und gekühlt.

Nachteilig an diesem Verfahren ist, daß die in dem getrockneten Gut verbleibenden Aluminiumreste bei Anwesenheit von Feuchtigkeit zumindest unter Freisetzung von Wasserstoff weiterreagieren, so daß ein Deponieraum also praktisch feuchtigkeitsfrei sein muß, wenn eine Reaktion völlig verhindert werden soll. Eine Kaverne ist aber nicht frei von Feuchtigkeit, so daß sich deren Verwendung als Deponieraum für Salzschlacke nach dem Stand der Technik verbietet.

Der Erfindung liegt die Aufgabe zugrunde, Salzschlacken aus der Aluminiumherstellung in Salzkavernen ohne Gefährdung der Umwelt zur Endlagerung zu bringen.

Zur Lösung der Aufgabe werden folgende Verfahrensschritte vorgeschlagen:
a) Absatzweises Einbringen des gemahlenen Feststoffes unter Abschluß von Luft in einen Bunker,
b) Ablassen des Feststoffes über ein Fallrohr in eine mit Inertgas gefüllte Salzkaverne,
c) Verbrennung der in der Salzkaverne entstehenden Gase durch einen Brenner,
d) Herauswaschen der durch die Verbrennung oxidierten Gase mit einer wäßrigen Lösung,
e) Deponierung der wäßrigen Waschlösung in der Salzkaverne.

Neben den in der als Reaktionsraum dienenden Salzkaverne durch Reaktion des Restaluminiums mit Feuchtigkeit bzw. Wasser entstehenden Schadgasen, wie Schwefelwasserstoff, Phosphorwasserstoff und Ammoniak, werden auch Wasserstoff und niedere Kohlenwasserstoffe, wie Methan oder Acetylen, gebildet, die in Verbindung mit Sauerstoff ein explosives Gemisch entstehen lassen. Durch das erfindungsgemäße Verfahren werden die Schadgase umweltfreundlich entsorgt, und es wird die Entstehung eines explosiven Gemisches durch die Vermeidung von Sauerstoffzufuhr, insbesondere durch den Einsatz einer Zellenradschleuse, verhindert. Zur weiteren Minimierung des Risikos der Entstehung eines explosiven Gemisches kann der Bunker selbst mit einem Inertgas gefüllt sein, und/oder es wird die Salzschlacke im Bunker mit einem Inertgas, beispielsweise Stickstoff oder Kohlendioxid, fluidisiert.

Im einzelnen zeichnet sich das Verfahren auch dadurch aus, daß die Gase aus der Salzkaverne vor deren Verbrennung in einem Speicherbehälter gesammelt werden, um dann bei Erreichen eines bestimmten Druckes die Gase im Brenner unter Luft- und Brennstoffzufuhr zu verbrennen. Um in jedem Fall sicherzustellen, daß keine Restmengen an Gasen nach der Verbrennung in die Umwelt gelangen, werden die Gase nach Durchlaufen des Wäschers gemäß Verfahrensschritt d) aus Anspruch 1 durch Adsorption an Aktivkohle gereinigt.

Für den Fall, daß die in der Salzkaverne vorhandene Flüssigkeit zur Reaktion nicht ausreicht, kann noch zusätzliche Flüssigkeit eingeführt werden.

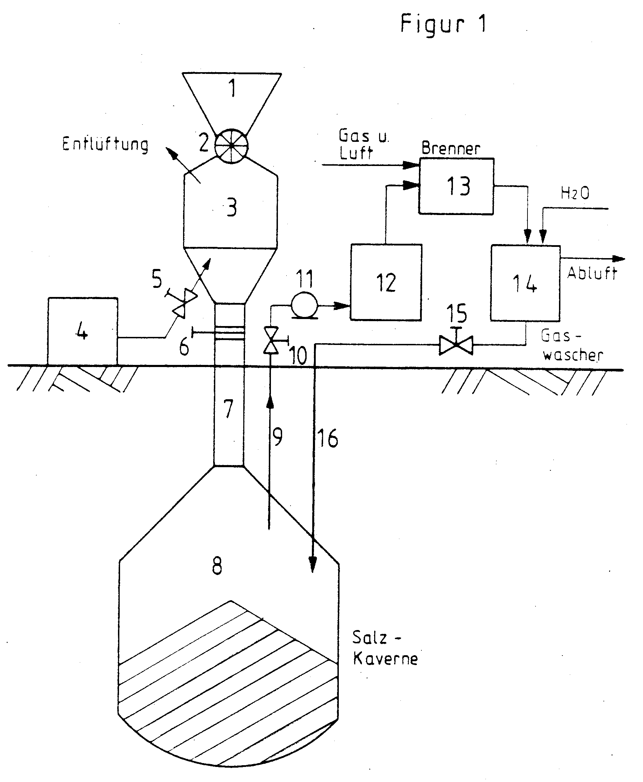

Im Detail wird das erfindungsgemäße Verfahren anhand der Fig. 1 näher erläutert:
Die Salzschlacke wird absatzweise über einen Trichter 1 und die Zellenradschleuse 2 in den Bunker 3 gegeben, der durch die Zellenradschleuse unter Luftabschluß steht, um zündfähige Gemische zu vermeiden. Darüber hinaus wird aus dem Behälter 4 über Ventil 5 ein Inertgas (Stickstoff bzw. CO₂) hinzugegeben. Die Salzschlacke wird damit fluidisiert und durch Öffnung des Ventils 6 über das Fallrohr 7 in die Salzkaverne 8 abgelassen.

Durch die in der Kaverne vorhandene Feuchtigkeit kommt es zu einer chemischen Reaktion mit den verschiedenen Bestandteilen der Salzschlacke und zur Entwicklung von (gasförmigen) Bestandteilen, wie Wasserstoff (H₂), Methan (CH₄), Schwefelwasserstoff (H₂S), Phosphorwasserstoffe, wie Phosphin (PH₃) oder Diphosphan (P₂H₄), und Ammoniak (NH₃).

Diese Gase werden mit Hilfe der Vakuumpumpe 11 (nach Öffnung des Ventils 10) über Rohrleitung 9 in den Speicherbehälter 12 gedrückt. Bei Erreichen eines vorgegebenen Überdrucks wird das Schadgas durch den Brenner 13 unter Luft- und Brennstoffzufuhr verbrannt. Die oxidierten Schadgase (in Form von Schwefeldioxid, P₂O₅ und nitrosen Gasen) werden im Wäscher 14 mit Wasser niedergeschlagen und die wäßrige Lösung nach Erreichen einer vorgegebenen Konzentration über das Fallrohr 16 in die Kaverne abgelassen. Die damit in die Kaverne gelangte Feuchtigkeit dient gleichzeitig als Reaktionswasser für die Umsetzung der Schadstoffe.

Die nicht ausgewaschenen Schadgasreste werden an Aktivkohle adsorptiv gebunden.

## Patentansprüche

1. Verfahren zur schadlosen Deponierung von rieselfähigen Feststoffen, insbesondere von Salzschlacken aus der Aluminiumherstellung, gekennzeichnet durch folgende Merkmale:
a) Absatzweises Einbringen des gemahlenen Feststoffes unter Abschluß von Luft in einen Bunker (3),
b) Ablassen des Feststoffes über ein Fallrohr in eine mit Inertgas gefüllte Salzkaverne (8),
c) Verbrennung der in der Salzkaverne (8) entstehenden Gase durch einen Brenner (13),
d) Herauswaschen der durch die Verbrennung oxidierten Gase mit einer wäßrigen Lösung,
e) Deponierung der wäßrigen Waschlösung in der Salzkaverne (8).

2. Verfahren nach Anspruch 1, dadurch gekennzeichnet, daß das Einbringen des gemahlenen Feststoffes in den Bunker (3) durch eine Zellenradschleuse (2) vorgenommen wird.

3. Verfahren nach Anspruch 1, dadurch gekennzeichnet, daß der Bunker (3) mit einem Inertgas gefüllt ist.

4. Verfahren nach Anspruch 1, dadurch gekennzeichnet, daß der Feststoff im Bunker mit einem Inertgas fluidisiert wird.

5. Verfahren nach Anspruch 1, dadurch gekennzeichnet, daß die in der Salzkaverne (8) entstehenden Gase vor deren Verbrennung in einem Speicherbehälter (12) gesammelt werden.

6. Verfahren nach Anspruch 1, dadurch gekennzeichnet, daß in die Salzkaverne (8) Flüssigkeit eingeführt wird.

7. Verfahren nach Anspruch 1, dadurch gekennzeichnet, daß die Gase nach Durchlaufen des Wäschers gemäß Verfahrensschritt d) durch Adsorption an Aktivkohle gereinigt werden, bevor diese in die Umgebung abgegeben werden.

## Claims

1. A method for the harmless disposal of flowable solids, in particular of salt slogs from aluminium production, characterised by the following features:
a) step-by-step introduction of the ground solid into a hopper (3) with air excluded,
b) discharging of the solid via a downpipe into a salt cavern (8) tilled with inert gas,
c) combustion of the gases produced in the salt cavern by a burner (13),
d) washing-out of the gases oxidised by the combustion using an aqueous solution,
e) dumping of the aqueous washing solution in the salt cavern (8).

2. A method according to Claim 1, characterised in that the introduction of the ground solid into the hopper (3) is performed by a rotary-vane feeder (2).

3. A method according to Claim 1, characterised in that the hopper (3) is filled with an inert gas.

4. A method according to Claim 1, characterised in that the solid in the hopper is fluidised with an inert gas.

5. A method according to Claim 1, characterised in that the gases produced in the salt cavern (8) are collected in a storage vessel (12) before the combustion thereof.

6. A method according to Claim 1, characterised in that liquid is introduced into the salt cavern (8).

7. A method according to Claim 1, characterised in that the gases, after passing through the washer in accordance with process step d) are purified by adsorption on activated carbon before they are given off into the environment.

## Revendications

1. Procédé de mise à la décharge, sans dommage, de matières solides susceptibles de s'écouler, notamment de scories de sel provenant de la fabrication de l'aluminium, caractérisé par les dispositions suivantes :
a) introduction en discontinu de la matière solide broyée à l'abri de l'air dans une trémie (3),
b) évacuation de la matière solide par un conduit de descente dans une caverne (8) de sel, emplie de gaz inerte,
c) combustion des gaz créés dans la caverne (8) de sel par un brûleur (13),
d) élimination des gaz oxydés par la combustion par lavage par une solution aqueuse,
e) mise à la décharge de la solution aqueuse de lavage dans la caverne (8) de sel.

2. Procédé suivant la revendication 1, caractérisé en ce qu'il consiste à effectuer l'introduction de la matière solide broyée dans la trémie (3) par un sas (2) à roue cellulaire.

3. Procédé suivant la revendication 1, caractérisé en ce qu'il consiste à remplir la trémie (3) de gaz inerte.

4. Procédé suivant la revendication 1, caractérisé en ce qu'il consiste à fluidiser la matière solide dans la trémie par du gaz inerte.

5. Procédé suivant la revendication 1, caractérisé en ce qu'il consiste à collecter les gaz créés dans la caverne (8) de sel dans un réservoir (12), avant leur combustion.

6. Procédé suivant la revendication 1, caractérisé en ce qu'il consiste à introduire du liquide dans la caverne (8) de sel.

7. Procédé suivant la revendication 1, caractérisé en ce qu'il consiste à épurer les gaz, après qu'ils ont passé dans le laveur suivant le stade d) du procédé, par adsorption sur du charbon actif, avant de les relacher à l'atmosphère.
